# FASCICULE DE BREVET EUROPEEN

(11) **EP 4 103 819 B1**
(45) Date de publication et mention de la délivrance du brevet: **04.06.2025**
(21) Numéro de dépôt: 21709069.5
(22) Date de dépôt: 09.02.2021
(51) Int. Cl.: F01D 5/14, B23P 15/04, B29C 70/24, F01D 5/28, F01D 9/04, F04D 29/32

(54) **AUBE EN MATERIAU COMPOSITE POUR STATOR DE TURBOMACHINE COMPRENANT UN NOYAU CREUX EN PLASTIQUE NON POREUX**
TURBOMASCHINENLEITSCHAUFEL AUS VERBUNDWERKSTOFF MIT HOHLEM KERN AUS NICHT-PORÖSEM KUNSTSTOFF
COMPOSITE TURBOMACHINE VANE COMPRISING A HOLLOW NON-POROUS PLASTICS CORE

(30) Priorité: 14.02.2020 FR 2001506
(43) Date de publication de la demande: 21.12.2022
(73) Titulaire: SAFRAN AIRCRAFT ENGINES, 75015 Paris (FR)
(72) Inventeur: GRELIN, Hervé, 77550 MOISSY-CRAMAYEL (FR); BAROUMES, Laurent, Jean-Baptiste, 77550 MOISSY-CRAMAYEL (FR)
(74) Mandataire: Brevalex
(86) Numéro de dépôt international: PCT/FR2021/050231
(87) Numéro de publication internationale: WO 2021/160961

(56) Documents cités:
- EP-A1- 2 177 752
- EP-A1- 3 075 963
- EP-A2- 1 852 572
- WO-A1-2011/026009
- US-A1- 2010 150 707
- US-A1- 2013 017 093

## Description

### DOMAINE TECHNIQUE

La présente invention se rapporte au domaine des aubes en matériau composite entrant dans la constitution de parties statoriques des turbomachines telles que les couronnes d'aubes directrices de sortie (ou « OGV »). L'invention concerne en particulier une aube pour stator de turbomachine, une couronne aubagée comprenant une telle aube, uns turbomachine comprenant une telle aube, et un procédé de fabrication d'une telle aube.

### ÉTAT DE LA TECHNIQUE ANTÉRIEURE

Une couronne d'aubes directrices de sortie comporte des aubes ayant une fonction aérodynamique, consistant à redresser le flux d'air secondaire en aval de la soufflante. Dans certaines turbomachines, certaines au moins des aubes directrices de sortie jouent un rôle structural, c'est-à-dire participent à la transmission d'efforts entre le moyeu et la virole externe de la couronne d'aubes directrices de sortie.

Par ailleurs, les exigences croissantes en matière d'allègement de la masse des turbomachines contribuent à la généralisation des techniques de fabrication de telles aubes directrices de sortie, et d'autres aubes de stator, en matériau composite à matrice organique, notamment un matériau comprenant des fibres de renfort formant un textile tri-dimensionnel.

Dans ce cadre, il est en particulier apparu souhaitable de réaliser une aube de stator comprenant un corps en forme de profil aérodynamique formé d'une coque réalisée en un matériau composite formé d'un textile tridimensionnel de fibres de renfort consolidé par une résine durcie, la coque formant une surface d'intrados de l'aube et une surface d'extrados de l'aube reliées l'une à l'autre en formant, d'un côté, un bord d'attaque de l'aube, et d'un côté opposé, un bord de fuite de l'aube, et un noyau comprenant un corps de noyau entouré par la coque.

Une telle configuration de l'aube permet un allègement de l'aube, par l'utilisation d'un noyau présentant une densité globale plus basse que celle de la coque.

À cet effet, il a en particulier été envisagé de réaliser un tel noyau en mousse.

Une difficulté, dans ce cas, réside néanmoins dans la nécessité de ne pas endommager ou casser le noyau pendant la fabrication de l'aube, notamment pendant l'insertion du noyau dans un passage formé au sein d'une préforme fibreuse destinée à former la coque aérodynamique de l'aube, avant consolidation de cette préforme fibreuse au moyen de la résine.

Or, les mousses disponibles pour ce type d'applications se révèlent trop fragiles pour supporter sans dommage ces opérations.

De plus, la fragilité de telles mousses limiterait les possibilités de réduction de masse d'un tel noyau, et donc d'une telle aube.

Le document US2013017093A1 divulgue une aube obtenue par tissage tridimensionnel, comprenant une coque en matériau composite entourant un noyau en forme de profil aérodynamique réalisé en un matériau rigide alvéolé. Dans certains modes de réalisation, le noyau est formé en plusieurs parties délimitant une cavité ouverte dans laquelle est insérée une poutre, tandis que dans d'autres modes de réalisation, le noyau est plein et monobloc.

### EXPOSÉ DE L'INVENTION

L'invention a notamment pour but d'apporter une solution simple, économique et efficace à ces problèmes.

Elle propose à cet effet une aube pour stator de turbomachine du type décrit ci-dessus, dans laquelle le noyau est réalisé en matériau plastique non poreux et le corps de noyau délimite au moins une cavité fermée du noyau.

La cavité fermée permet un allègement du noyau. Le noyau permet ainsi une réduction de masse de l'aube, tout en offrant une bonne résistance aux efforts susceptibles d'être appliqués au noyau pendant la fabrication de l'aube, comme cela apparaîtra plus clairement dans ce qui suit. De plus, la forme de profile aérodynamique du corps de noyau permet de conférer la forme adéquate à la coque au cours de la fabrication de l'aube, comme cela apparaîtra plus clairement dans ce qui suit.

De préférence, la coque se prolonge au-delà du corps de noyau en formant un pied d'aube et une tête d'aube s'étendant respectivement à deux extrémités opposées du corps de l'aube et par lesquels l'aube est apte à être fixée respectivement à un moyeu et une virole externe d'une couronne aubagée de stator de turbomachine.

De préférence, le noyau comporte deux portions de noyau assemblées l'une à l'autre.

L'invention concerne aussi une couronne aubagée de stator pour turbomachine, comprenant un moyeu et une virole externe reliés l'un à l'autre par au moins une aube du type décrit ci-dessus.

L'invention concerne aussi une turbomachine, comprenant au moins une aube du type décrit ci-dessus ou au moins une couronne aubagée du type décrit ci-dessus.

L'invention concerne aussi un procédé de fabrication d'une aube pour stator de turbomachine, comprenant au moins les étapes suivantes :
A) fabriquer, par tissage tridimensionnel de fibres de renfort, une préforme fibreuse comprenant deux portions séparées l'une de l'autre par un passage et reliées l'une à l'autre de part et d'autre du passage ;
B) préparer un ensemble composé de la préforme fibreuse et d'un noyau réalisé en matériau plastique non poreux comprenant un corps de noyau en forme de profil aérodynamique qui délimite au moins une cavité fermée du noyau, le corps de noyau étant logé dans le passage de la préforme fibreuse, de sorte que la préforme fibreuse présente une partie d'intrados et une partie d'extrados séparées l'une de l'autre par le corps de noyau et reliées l'une à l'autre de part et d'autre du corps de noyau en formant une partie de bord d'attaque et une partie de bord de fuite ; puis
C) consolider la préforme fibreuse au moyen d'une résine, par un procédé de moulage composite liquide, de manière à former une coque dans laquelle la partie d'intrados de la préforme fibreuse forme une surface d'intrados de l'aube, la partie d'extrados de la préforme fibreuse forme une surface d'extrados de l'aube, la partie de bord d'attaque de la préforme fibreuse forme un bord d'attaque de l'aube, et la partie de bord de fuite de la préforme fibreuse forme un bord de fuite de l'aube.

Dans un premier mode de réalisation préféré de l'invention, l'étape B comprend au moins les étapes suivantes :
b1) fabriquer le noyau ; puis
b2) insérer le corps de noyau dans le passage de la préforme fibreuse.

Dans un deuxième mode de réalisation préféré de l'invention, l'étape B comprend au moins les étapes suivantes :
b1') fabriquer séparément des portions de noyau, parmi lesquelles au moins une première portion de noyau comporte ou forme une portion de corps de noyau respective ; puis
b2') insérer au moins la portion de corps de noyau de la première portion de noyau dans le passage de la préforme fibreuse, puis
b3') assembler les portions de noyau l'une à l'autre ou les unes aux autres, en joignant des extrémités respectives des portions de noyau d'une manière étanche, de sorte que les portions de noyau forment conjointement le noyau, et que au moins la portion de corps de noyau de la première portion de noyau forme le corps de noyau du noyau.

De préférence, au moins une deuxième portion de noyau, parmi les portions de noyau fabriquées à l'étape b1', comporte ou forme une portion de corps de noyau respective, l'étape b2' comprend en outre l'insertion de la portion de corps de noyau de la deuxième portion de noyau dans le passage de la préforme fibreuse, et l'assemblage des portions de noyau les unes aux autres à l'étape b3' comprend au moins l'assemblage de la deuxième portion de noyau à la première portion de noyau en joignant des extrémités de jonction respectives des portions de corps de noyau respectives des première et deuxième portions de noyau d'une manière étanche au sein du passage.

De préférence, les extrémités de jonction respectives des portions de corps de noyau respectives des première et deuxième portions de noyau interceptent deux ouvertures opposées du passage, à l'issue de l'étape b3'.

En variante, les extrémités de jonction respectives des portions de corps de noyau respectives des première et deuxième portions de noyau s'étendent sensiblement transversalement à une direction d'envergure du noyau, à l'issue de l'étape b3'.

Dans des modes de réalisation de l'invention, la cavité fermée du noyau formé à l'étape b2' est formée conjointement par deux cavités ouvertes respectives des première et deuxième portions de noyau fabriquées à l'étape b1', les deux cavités ouvertes s'ouvrant chacune dans l'extrémité de jonction correspondante.

Dans des modes de réalisation de l'invention, deux portions de noyau, parmi les portions de noyau fabriquées à l'étape b1', comportent ou forment chacune une partie d'extrémité correspondante du noyau présentant une forme évasée jusqu'à une extrémité correspondante du noyau.

Dans des modes de réalisation de l'invention, l'étape A comprend la fabrication de la préforme fibreuse en tissant des fils de trame au travers d'un faisceau de fils de chaîne agencés en une pluralité de nappes, et en pratiquant un déliage partiel entre deux nappes de fils de chaîne, de sorte que ledit déliage partiel forme le passage séparant les deux portions de la préforme fibreuse.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en coupe axiale d'une turbomachine pour aéronef ;
- la figure 2 est une vue schématique en perspective d'une couronne aubagée, telle qu'une couronne d'aubes directrices de sortie, appartenant à la turbomachine de la figure 1 et illustrée isolée ;
- la figure 3 est une vue schématique en perspective d'une aube pour stator de turbomachine selon l'invention, destinée par exemple à faire partie de la couronne aubagée de la figure 2 ;
- la figure 4 est une vue schématique en perspective d'une préforme fibreuse destinée à constituer une coque de l'aube de la figure 3 ;
- la figure 5 est une vue schématique en perspective d'un noyau de l'aube de la figure 3, selon un premier mode de réalisation préféré de l'invention ;
- la figure 6 est une vue schématique en section transversale de l'aube de la figure 3 avant consolidation de la préforme fibreuse ;
- la figure 7 est une vue schématique en perspective de deux portions de noyau destinées à constituer un noyau de l'aube de la figure 3, selon un deuxième mode de réalisation préféré de l'invention ;
- la figure 8 est une vue schématique en perspective de deux portions de noyau destinées à constituer un noyau de l'aube de la figure 3, selon une variante du deuxième mode de réalisation préféré de l'invention ;
- la figure 9 est une vue schématique en section longitudinale d'une aube selon un mode de réalisation de l'invention au cours d'une étape d'un procédé de fabrication de l'aube ;
- la figure 10 est une vue semblable à la figure 9, illustrant une autre étape, ultérieure, du procédé de fabrication de l'aube ;
- la figure 11 est une vue schématique en perspective de deux portions de noyau destinées à constituer un noyau de l'aube de la figure 3, selon une autre variante du deuxième mode de réalisation préféré de l'invention ;
- la figure 12 est une vue semblable à la figure 6, illustrant une variante de l'aube selon l'invention ;
- la figure 13 est un organigramme du procédé de fabrication de l'aube, selon le premier mode de réalisation préféré de l'invention ;
- la figure 14 est un organigramme du procédé de fabrication de l'aube, selon le deuxième mode de réalisation préféré de l'invention.

Dans l'ensemble de ces figures, des références identiques peuvent désigner des éléments identiques ou analogues.

### EXPOSÉ DÉTAILLÉ DE MODES DE RÉALISATION PARTICULIERS

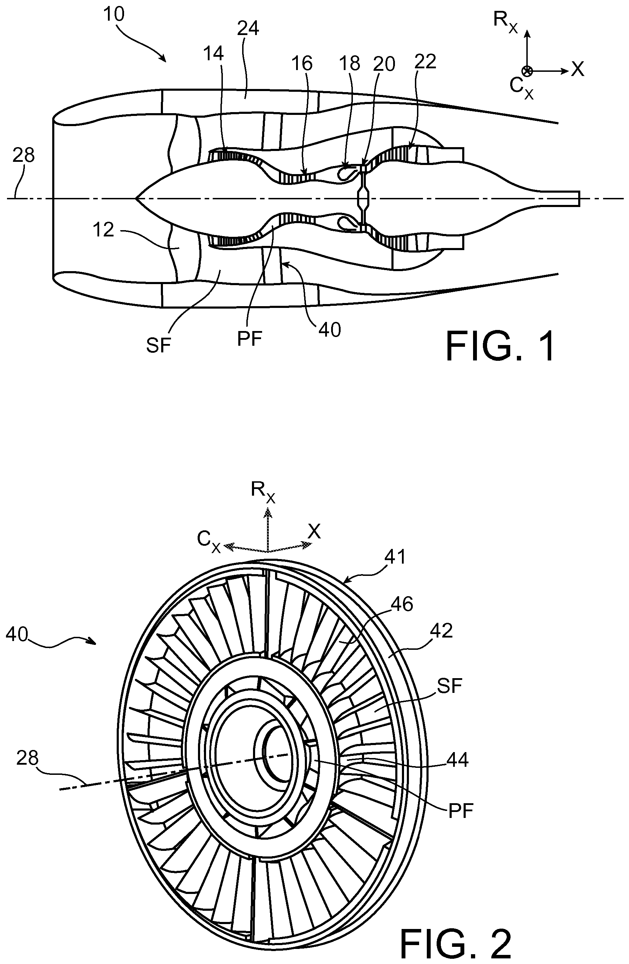

La figure 1 illustre une turbomachine 10 pour aéronef d'un type connu, comportant de manière générale une soufflante 12 destinée à l'aspiration d'un flux d'air se divisant en aval de la soufflante en un flux primaire circulant dans un canal d'écoulement de flux primaire, ci-après dénommé veine primaire PF, au sein d'un cœur de la turbomachine, et un flux secondaire contournant ce cœur dans un canal d'écoulement de flux secondaire, ci-après dénommé veine secondaire SF.

La turbomachine est par exemple du type à double flux et à double corps. Le cœur de la turbomachine comporte ainsi, de manière générale, un compresseur basse pression 14, un compresseur haute pression 16, une chambre de combustion 18, une turbine haute pression 20 et une turbine basse pression 22.

Les rotors respectifs du compresseur haute pression et de la turbine haute pression sont reliés par un arbre de rotor dit « arbre haute pression », tandis que les rotors respectifs du compresseur basse pression et de la turbine basse pression sont reliés par un arbre de rotor dit « arbre basse pression ».

La turbomachine est carénée par une nacelle 24 entourant la veine secondaire SF.

Les arbres de rotor sont montés rotatifs autour d'un axe 28 de la turbomachine.

Dans l'ensemble de cette description, la direction axiale X est la direction de l'axe 28. La direction radiale Rₓ est en tout point une direction orthogonale à l'axe 28 et passant par ce dernier, et la direction circonférentielle Cₓ est en tout point une direction orthogonale à la direction radiale Rₓ et à l'axe 28. Les termes « interne » et « externe » font respectivement référence à une relative proximité, et un relatif éloignement, d'un élément par rapport à l'axe 28. Enfin, les directions « amont » et « aval » sont définies par référence à la direction générale de l'écoulement des gaz dans les veines primaire PF et secondaire SF de la turbomachine, selon la direction axiale X.

La turbomachine comprend un carter intermédiaire 40 agencé en aval de la soufflante 12, axialement entre le compresseur basse pression 14 et le compresseur haute pression 16, et représenté isolé sur la figure 2.

Ce carter intermédiaire 40 comporte une couronne aubagée 41, centrée sur l'axe 28, et comprenant une virole externe 42, un moyeu 44, et des aubes 46, couramment appelées aubes directrices de sortie (« OGV »), qui s'étendent au travers de la veine secondaire SF en reliant la virole externe 42 au moyeu 44. La virole externe 42 s'étend autour de la veine secondaire SF et du moyeu 44, tandis que le moyeu 44 s'étend radialement à l'intérieur par rapport à la veine secondaire SF, et radialement à l'extérieur par rapport à la veine primaire PF.

La présente invention est particulièrement avantageuse lorsque certaines ou toutes les aubes 46 remplissent une fonction structurale, c'est-à-dire transmettent des efforts de liaison entre deux pièces, par exemple entre le moyeu 44 et la virole externe 42, comme cela apparaîtra plus clairement dans ce qui suit. L'invention peut néanmoins également être appliquée à des aubes ne remplissant pas une telle fonction structurale. L'invention est également applicable à des aubes de stator disposées en un autre emplacement d'une turbomachine.

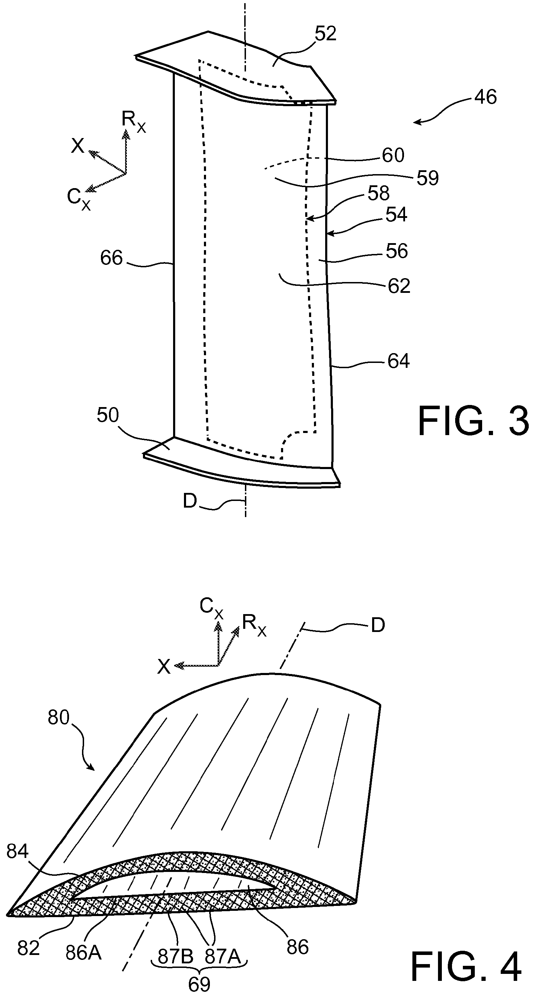

Comme le montre la figure 3, une aube 46 comporte de manière générale un pied d'aube 50 et une tête d'aube 52 agencées respectivement à deux extrémités opposées de l'aube, et un corps 54 en forme de profil aérodynamique, parfois dénommé pale, s'étendant selon une direction d'envergure D de l'aube, en reliant le pied d'aube 50 à la tête d'aube 52 (la direction d'envergure D étant généralement une direction radiale définie en un plan médian de l'aube). Le pied d'aube 50 est destiné à être fixé au moyeu 44, et la tête d'aube 52 est destinée à être reliée à la virole externe 42, ce qui peut être accompli par une technique connue et ne sera pas décrit en détail ici.

Le corps 54 de l'aube 46 est formé d'une coque 56.

L'aube 46 comporte en outre un noyau 58 comportant un corps de noyau 59 entouré par la coque 56.

La coque 56 est réalisée en un matériau composite formé de fibres de renfort consolidées par une résine organique durcie, par exemple une résine époxy.

La coque 56 forme une surface d'intrados 60 de l'aube 46 et une surface d'extrados 62 de l'aube 46. La surface d'intrados 60 et la surface d'extrados 62 sont agencées de part et d'autre du corps de noyau 59 et sont reliées l'une à l'autre au-delà du corps de noyau 59, d'un côté en formant un bord d'attaque 64 de l'aube 46, et d'un côté opposé en formant un bord de fuite 66 de l'aube 46.

Dans l'exemple illustré, la coque 56 se prolonge au-delà du corps de noyau 59 en formant le pied d'aube 50 et la tête d'aube 52 s'étendant respectivement à deux extrémités opposées du corps 54 de l'aube.

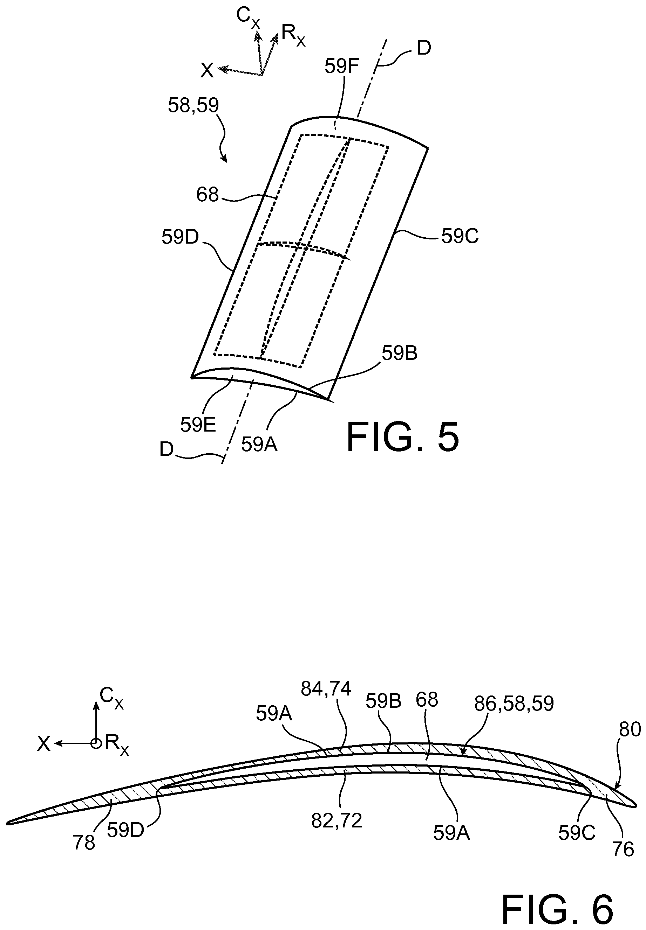

Le noyau 58, visible seul sur la figure 5, est réalisé en matériau plastique non poreux.

Le matériau plastique constituant le noyau 58 est de préférence un matériau thermoplastique, par exemple un polyétheréthercétone (PEEK) ou un polyétherimide (PEI). Ces matériaux permettent une stabilité thermique et mécanique à haute température, et sont ainsi particulièrement adaptés aux cycles de cuisson dans le cadre des procédés de moulage par injection basse pression de résine (RTM).

De plus, le corps de noyau 59 est en forme de profil aérodynamique, c'est-à-dire en forme de pale. Autrement dit, le corps de noyau 59 présente une surface d'intrados 59A et une surface d'extrados 59B raccordées l'une à l'autre, d'une part en formant un bord d'attaque 59C du corps de noyau, et d'autre part en formant un bord de fuite 59D du corps de noyau.

Dans l'exemple illustré sur la figure 5, le noyau 58 est intégralement constitué par le corps de noyau 59.

Le corps de noyau 59 comporte en outre une cavité fermée 68 (figure 5) ou plusieurs cavités fermées.

La cavité fermée 68 (ou chaque cavité fermée) du corps de noyau 59 permet un allègement avantageux du noyau, et donc un allègement supplémentaire de l'aube 46.

Autrement dit, le corps de noyau 59 est formé de deux parois profilées qui définissent respectivement la surface d'intrados 59A et la surface d'extrados 59B du corps de noyau 59 et qui sont séparées l'une de l'autre par la cavité fermée (ou l'ensemble de cavités fermées) et raccordées l'une à l'autre de part et d'autre de la cavité fermée (ou de l'ensemble de cavités fermées) en formant le bord d'attaque 59C et le bord de fuite 59D du corps de noyau 59, ainsi qu'une extrémité côté pied 59E du corps de noyau et une extrémité côté tête 59F du corps de noyau.

La cavité fermée 68 (ou l'ensemble de cavités fermées) présente ainsi des extrémités respectivement du côté du bord d'attaque 59C du corps de noyau et du côté du bord de fuite 59D du corps de noyau, qui sont distantes respectivement du bord d'attaque 59C du corps de noyau et du bord de fuite 59D du corps de noyau.

Par ailleurs, les fibres de renfort du matériau composite formant la coque 56 (figure 3) sont agencées sous la forme d'un textile à trois dimensions, également dénommé textile 3D, et plus particulièrement sous la forme d'une structure tissée, qui peut être constituée de bandes tissées assemblées entre elles ou d'une unique structure tissée tridimensionnelle. Ces fibres de renfort 69 sont visibles sur la figure 4 qui illustre une préforme fibreuse destinée à former la coque 56 après consolidation, comme cela apparaîtra plus clairement dans ce qui suit.

La coque 56 présente ainsi une résistance optimale, ce qui est particulièrement avantageux dans les cas où la coque 56 doit conférer une fonction structurale à l'aube 46. Le noyau 58 n'est en effet pas prévu pour contribuer à une telle fonction structurale de l'aube 46. La résistance de l'aube 46 est notamment avantageuse en cas d'impact ou d'ingestion de corps étranger dans la turbomachine.

D'une manière générale, le noyau 58 permet donc une réduction de masse de l'aube 46, tout en offrant une bonne résistance aux efforts susceptibles d'être appliqués au noyau pendant la fabrication de l'aube 46. De plus, la forme profilée du corps de noyau 59 permet de conférer la forme adéquate à la coque 56 au cours de la consolidation de la résine, comme cela apparaîtra plus clairement dans ce qui suit.

Un procédé de fabrication d'une aube pour stator de turbomachine, telle que l'aube 46, consiste, de manière générale, à :
A) fabriquer , par tissage tridimensionnel de fibres de renfort, une préforme fibreuse 80 (figure 4) comprenant deux portions 82, 84 séparées l'une de l'autre par un passage 86 et reliées l'une à l'autre de part et d'autre du passage 86 ;
B) préparer un ensemble composé de la préforme fibreuse 80 et du noyau 58, dans lequel le corps de noyau 59 est logé dans le passage 86 de la préforme fibreuse 80 (figure 6), de sorte que la préforme fibreuse 80 présente une partie d'intrados 72 et une partie d'extrados 74 séparées l'une de l'autre par le corps de noyau 59 et reliées l'une à l'autre de part et d'autre du corps de noyau 59 en formant une partie de bord d'attaque 76 et une partie de bord de fuite 78 ; et
C) consolider la préforme fibreuse 80 au moyen d'une résine, par un procédé de moulage composite liquide (LCM), de manière à former la coque 56, dans laquelle la partie d'intrados 72 de la préforme fibreuse 80 (figure 6) forme la surface d'intrados 60 de l'aube (figure 3), la partie d'extrados 74 de la préforme fibreuse 80 (figure 6) forme la surface d'extrados 62 de l'aube (figure 3), la partie de bord d'attaque 76 de la préforme fibreuse 80 (figure 6) forme le bord d'attaque 64 de l'aube (figure 3), et la partie de bord de fuite 78 de la préforme fibreuse 80 (figure 6) forme le bord de fuite 66 de l'aube (figure 3).

De préférence, l'étape A comprend la fabrication de la préforme fibreuse 80 en tissant des fils de trame 87A au travers d'un faisceau de fils de chaîne 87B agencés en une pluralité de nappes, et en pratiquant un déliage partiel entre deux nappes de fils de chaîne, par exemple au moyen de la méthode divulguée dans le document FR2940173 (ou son équivalent en langue anglaise US2011318513), moyennant quoi le déliage partiel forme le passage 86 séparant les deux portions 82, 84 de la préforme fibreuse 80.

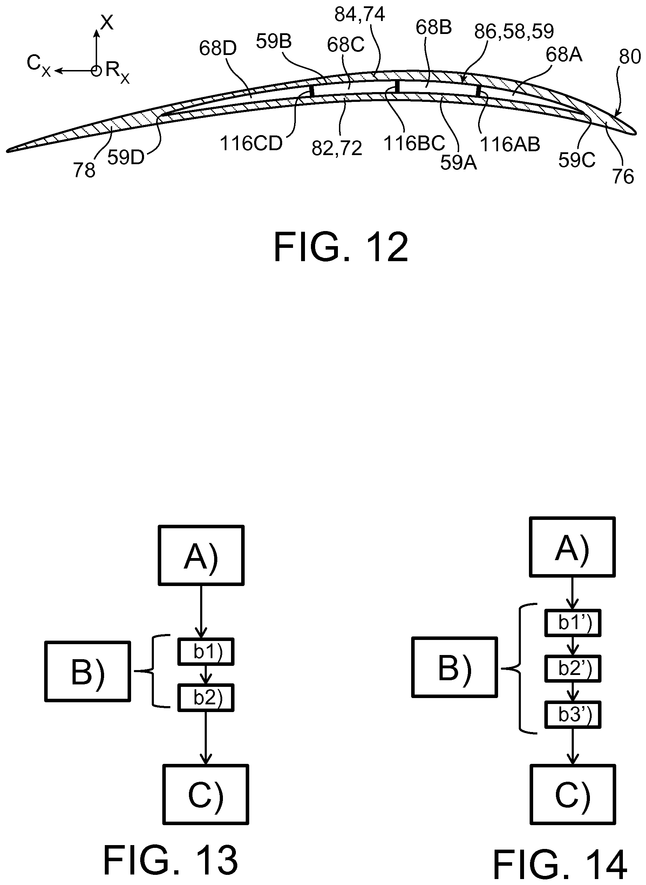

Dans un premier mode de réalisation préféré du procédé de fabrication d'aube selon l'invention, illustré par l'organigramme de la figure 12, l'étape B comprend les étapes consistant à :
b1) fabriquer le noyau 58 (figure 5), puis ;
b2) insérer le corps de noyau 59 dans le passage 86 de la préforme fibreuse 80 (figure 6).

L'étape b1 de fabrication du noyau 58 est par exemple mise en œuvre au moyen d'une technique d'injection-soufflage ou d'extrusion-soufflage, auxquels cas le point de soufflage est ensuite fermé au moyen d'un bouchon. Le noyau 58 peut, en variante, être réalisé au moyen d'une technique de roto-moulage. Ces techniques permettent la fabrication du noyau 58 sensiblement d'un seul tenant.

En variante, le noyau 58 peut être réalisé en plusieurs parties assemblées l'une à l'autre avant l'étape b2 d'insertion du noyau 58 dans le passage 86, lorsque la forme du noyau le permet. Dans ce cas, chacune des parties du noyau 58 peut être réalisée par exemple par une technique de moulage par injection. L'assemblage des parties du noyau 58 est ensuite par exemple réalisé au moyen d'une technique de soudage par ultrasons, ou par collage, ou par encliquetage élastique avec, si nécessaire, interposition d'un joint d'étanchéité entre les parties.

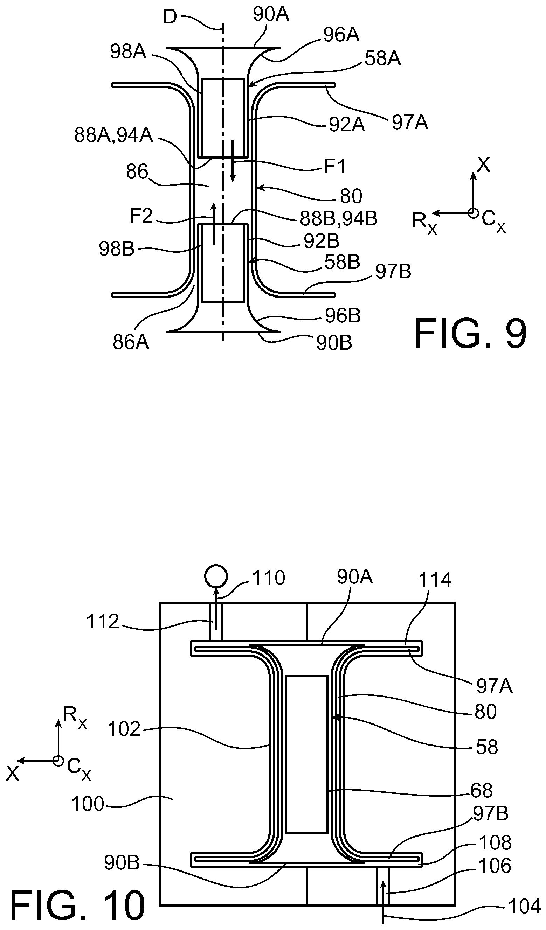

Dans un deuxième mode de réalisation préféré du procédé de fabrication d'aube selon l'invention, illustré par l'organigramme de la figure 13, l'étape B comprend les étapes consistant à :
b1') fabriquer séparément des portions de noyau, parmi lesquelles au moins une première portion de noyau comporte ou forme une portion de corps de noyau respective ; puis
b2') insérer au moins la portion de corps de noyau de la première portion de noyau dans le passage 86 de la préforme fibreuse 80 (figure 9 : flèche F1) ; puis
b3') assembler les portions de noyau l'une à l'autre ou les unes aux autres en joignant des extrémités respectives des portions de noyau d'une manière étanche, de sorte que les portions de noyau forment conjointement le noyau 58, et que au moins la portion de corps de noyau de la première portion de noyau forme le corps de noyau 59 du noyau 58 (figure 9).

L'assemblage des portions de noyau l'une à l'autre ou les unes aux autres est par exemple réalisé par collage ou par encliquetage élastique ou encore par soudage par ultrasons.

D'une manière générale, la réalisation du noyau 58 en plusieurs parties autorise des formes du noyau 58 qui ne permettraient pas l'insertion du noyau 58 entier dans le passage 86 de la préforme fibreuse 80.

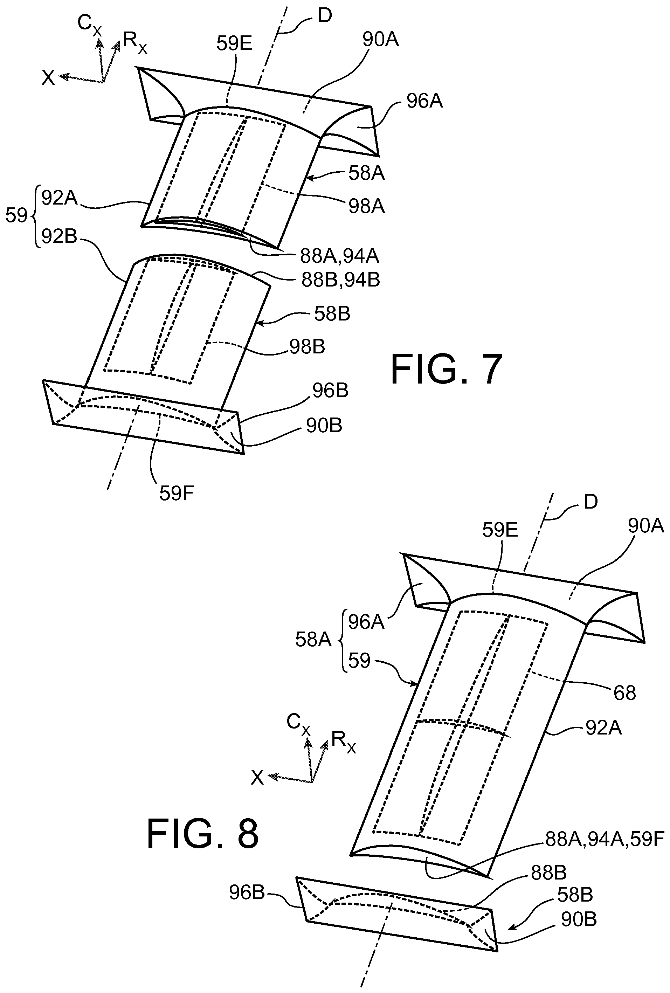

Ainsi, dans des modes de réalisation préférés, l'étape b1' comprend la fabrication de deux portions de noyau 58A, 58B (figures 7 et 8) de manière séparé, les deux portions de noyau 58A, 58B présentant chacune une extrémité proximale 88A, 88B respective et une extrémité distale 90A, 90B respective, de sorte qu'au moins une première 58A des deux portions de noyau comporte une portion de corps de noyau 92A respective présentant une extrémité de jonction 94A respective formant l'extrémité proximale 88A correspondante. Ensuite, l'étape b2' comprend l'insertion d'au moins la portion de corps de noyau respective 92A de la première portion de noyau 58A dans le passage 86 de la préforme fibreuse 80 (figure 9 : flèche F1). Enfin, l'étape b3' comprend l'assemblage de la deuxième portion de noyau 58B à la première portion de noyau 58A en joignant les extrémités proximales 88A, 88B respectives des deux portions de noyau 58A, 58B d'une manière étanche, de sorte que les deux portions de noyau 58A, 58B forment conjointement le noyau 58, et que au moins la portion de corps de noyau 92A de la première portion de noyau 58A forme le corps de noyau 59 du noyau 58 (figure 9).

De plus, chacune des deux portions de noyau 58A, 58B fabriquées à l'étape b1' comporte une partie d'extrémité respective 96A, 96B de forme évasée jusqu'à l'extrémité distale respective correspondante 90A, 90B. Les parties d'extrémité respectives 96A, 96B des portions de noyau 58A, 58B sont respectivement destinées à servir de support à deux structures de fibres de renfort 97A, 97B (visibles sur les figures 9 et 10) destinées, après consolidation au moyen de résine, à former respectivement le pied d'aube 50 et la tête d'aube 52. Ces deux structures de fibres de renfort 97A, 97B peuvent faire partie intégrante de la préforme fibreuse 80 entourant le corps de noyau 59, ou être rapportées sur la préforme fibreuse 80.

Dans l'exemple illustré sur la figure 7, la deuxième portion de noyau 58B fabriquée à l'étape b1' comporte également une portion de corps de noyau respective 92B présentant une extrémité de jonction 94B respective formant l'extrémité proximale correspondante 88B de la deuxième portion de noyau 58B.

De plus, l'étape b2' comprend en outre l'insertion de la portion de corps de noyau 92B de la deuxième portion de noyau 58B dans le passage 86 de la préforme fibreuse 80 (figure 9 : flèche F2), et l'assemblage des portions de noyau les unes aux autres à l'étape b3' comprend au moins l'assemblage de la deuxième portion de noyau 58B à la première portion de noyau 58A en joignant les extrémités de jonction 94A, 94B respectives des portions de corps de noyau 92A, 92B respectives des première et deuxième portions de noyau 58A, 58B d'une manière étanche au sein du passage 86.

Dans ce cas, les deux portions de corps de noyau 92A, 92B respectives des deux portions de noyau 58A, 58B forment ensemble le corps de noyau 59 du noyau 58, après l'assemblage des deux portions de noyau 58A, 58B.

Dans l'exemple illustré sur la figure 7, chacune des deux portions de noyau 58A, 58B fabriquées à l'étape b1' présente une cavité ouverte 98A, 98B respective formée au moins dans la portion de corps de noyau 92A, 92B correspondante, et qui s'ouvre dans l'extrémité de jonction correspondante 94A, 94B. Après assemblage des portions de noyau 58A, 58B, les deux cavités ouvertes respectives 98A, 98B communiquent l'une avec l'autre de manière à former ensemble la cavité fermée 68 du noyau 58 formé à l'étape b3' (visible sur la figure 10).

En variante, l'une des deux portions de noyau 58A, 58B peut comporter une ou plusieurs cavité(s) fermée(s) tandis que l'autre portion de noyau peut ne comporter aucune cavité, ou peut comporter une ou plusieurs autre(s) cavité(s) fermée(s).

En variante, dans l'exemple illustré sur la figure 8, la deuxième portion de noyau 58B ne comporte pas de portion de corps de noyau destinée à former une partie du corps de noyau 59. La deuxième portion de noyau 58B est seulement constituée par la partie d'extrémité respective 96B correspondante. L'opération d'assemblage des portions de noyau 58A, 58B l'une à l'autre peut dans ce cas s'effectuer à l'extérieur du passage 86 de la préforme fibreuse 80 après l'insertion de la portion de corps de noyau 92A dans le passage 86.

Dans l'exemple illustré sur la figure 8, la cavité fermée 68 est ainsi intégralement formée dans la première portion de noyau 58A.

Dans les exemples correspondants aux figures 7 et 8, la jonction des portions de noyau 58A, 58B s'effectue le long d'extrémités de jonction 94A, 94B respectives des portions de corps de noyau 92A, 92B correspondantes qui s'étendent sensiblement transversalement à une direction d'envergure du noyau 58, c'est-à-dire une direction allant de l'extrémité côté pied 59E vers l'extrémité côté tête 59F du corps de noyau 59, qui correspond à la direction d'envergure D de l'aube au terme de la fabrication de cette dernière. Par « sensiblement transversalement », il faut comprendre de manière générale que les extrémités de jonction 94A, 94B n'interceptent pas deux ouvertures opposées 86A, 86B du passage 86 (figures 4 et 9), à l'issue de l'étape b3'.

Ainsi, dans l'exemple de la figure 7, les extrémités de jonction 94A, 94B sont destinées à être entièrement logées dans le passage 86, à distance des ouvertures 86A, 86B de celui-ci. Il en est de même dans l'exemple de la figure 8, dans le cas où les deux structures de fibres de renfort 97A, 97B, destinées à former le pied d'aube 50 et la tête d'aube 52, font partie intégrante de la préforme fibreuse 80 entourant le corps de noyau 59, ou sont rapportées sur la préforme fibreuse 80 avant l'étape b2', de sorte que les structures de fibres de renfort 97A, 97B participent à délimiter le passage 86. À l'inverse, dans le cas où les structures de fibres de renfort 97A, 97B sont rapportées sur la préforme fibreuse 80 après l'étape b3', les extrémités de jonction 94A, 94B sont destinées à être entièrement situées à l'extérieur du passage 86, avant que les structures de fibres de renfort 97A, 97B ne soient rapportées sur la préforme fibreuse 80.

Le procédé permet par ailleurs que le noyau 58 présente une partie médiane plus large que ne l'est le passage 86 au niveau de son entrée, par exemple pour former une aube ayant une longueur de corde plus élevée dans une portion médiane du corps de l'aube qu'aux extrémités du corps de l'aube.

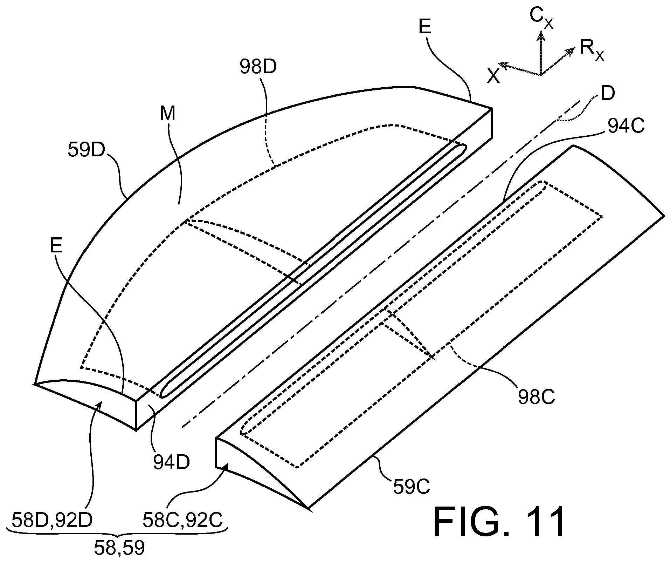

À cet effet, en référence à la figure 11, le noyau 58 comporte deux portions de noyau 58C, 58D comprenant ou formant respectivement deux portions de corps de noyau 92C, 92D présentant des extrémités de jonction 94C, 94D respectives qui interceptent les deux ouvertures opposées 86A, 86B du passage 86 (figures 4 et 9), à l'issue de l'étape b3'.

D'une manière générale, lorsqu'une première des portions de noyau est en place dans le passage 86, avant l'insertion de l'autre portion de noyau, la première portion de noyau peut ainsi être décalée transversalement à la direction d'envergure du noyau 58 correspondant à la direction d'envergure D de l'aube, de manière à agrandir l'espace restant au sein des ouvertures 86A, 86B du passage 86 et permettre ainsi l'insertion de l'autre portion de noyau dans le passage.

Dans l'exemple de la figure 11, les extrémités de jonction 94C, 94D s'étendent ainsi selon la direction d'envergure du noyau 58.

De plus, l'une des portions de corps de noyau 92D présente un bord destiné à former par exemple le bord de fuite 59D du corps de noyau 59. Ce bord présente une forme incurvée de sorte qu'une partie médiane M du corps de noyau 59 soit plus large (transversalement à la direction d'envergure D) que des extrémités E du corps de noyau 59.

L'étape b2' comprend dans ce cas l'insertion de la portion de corps de noyau 92D dans le passage 86, puis le décalage de cette portion de corps de noyau 92D transversalement à la direction d'envergure D de manière à dégager, au niveau de l'une des ouvertures 86A, 86B du passage 86, un espace par lequel est ensuite insérée l'autre portion de corps de noyau 92C.

Ici encore, chacune des deux portions de noyau 58C, 58D fabriquées à l'étape b1' présente une cavité ouverte 98C, 98D respective formée au moins dans la portion de corps de noyau 92C, 92D correspondante, et qui s'ouvre dans l'extrémité de jonction correspondante 94C, 94D. Après assemblage des portions de noyau 58C, 58D, les cavités ouvertes respectives 98C, 98D communiquent l'une avec l'autre de manière à former ensemble la cavité fermée 68 du noyau 58 formé à l'étape b3'.

En variante, un noyau 58 peut être formé à la fois de portions de noyau jointes par des extrémités de jonction qui interceptent les deux ouvertures opposées 86A, 86B du passage 86, et de portions de noyau jointes par des extrémités de jonction qui n'interceptent pas les deux ouvertures opposées 86A, 86B du passage 86.

Une telle variante est notamment avantageuse dans le cas où les deux structures de fibres de renfort 97A, 97B font partie intégrante de la préforme fibreuse 80 entourant le corps de noyau 59, ou sont rapportées sur la préforme fibreuse 80 avant l'étape b2', de sorte que les structures de fibres de renfort 97A, 97B participent à délimiter le passage 86, et où le noyau 58 comporte à la fois des parties d'extrémité de forme évasée comme sur les figures 7 et 8 et une partie médiane proéminente comme sur la figure 11.

Par ailleurs, l'étape b1 ou b1' peut être indifféremment mise en œuvre avant ou après l'étape A.

Le procédé de moulage composite liquide (LCM) au moyen duquel la préforme fibreuse 80 est consolidée à l'étape C est de préférence un procédé de moulage par injection basse pression de résine (RTM). Un tel procédé comprend la mise en place de l'ensemble formé par le noyau 58 et la préforme fibreuse 80 dans une cavité 102 d'un moule 100 (figure 10), l'injection de résine thermodurcissable (flèche 104) par un canal d'injection 106 débouchant, par exemple, en regard d'une région 108 de la cavité 102 destinée à constituer le pied d'aube 50 (figure 3), jusqu'à ce que la résine remplisse un évent de fin de remplissage 112 (figure 10 : flèche 110), par exemple agencé en regard d'une région 114 de la cavité 102 destinée à constituer la tête d'aube 52 (figure 3). Le procédé comporte ensuite le durcissement de la résine aboutissant à l'obtention de la coque 56, puis le démoulage de l'aube 46 ainsi obtenue.

En variante, le procédé de moulage composite liquide (LCM) peut être du type connu sous la dénomination Polyflex et présenté dans le document WO2005000566.

Dans certains exemples de réalisation, la liaison entre la coque 56 en matériau composite et le noyau 58 en matériau plastique non poreux est assurée pas une accroche mécanique et chimique de la résine époxy formant la matrice du matériau composite lors de l'injection et le durcissement de la résine. Toutefois, il est à noter que la tenue de l'interface entre le noyau 58 et la coque 56 n'est pas nécessaire au bon fonctionnement de l'aube 46 et n'est donc pas une exigence en termes de spécifications pour les conditions en service.

En variante, comme illustré sur la figure 12, le corps de noyau 59 peut comporter plusieurs cavités fermées 68A, 68B, 68C, 68D, par exemple au nombre de quatre, séparées deux-à-deux par un raidisseur correspondant 116AB, 116BC, 116CD, auquel cas chacune des cavités fermées 68A, 68B, 68C, 68D peut être formée d'un seul tenant, de manière analogue à ce qui est décrit ci-dessus en référence à la figure 8, ou être formée par la réunion de deux cavités ouvertes en regard l'une de l'autre, de manière analogue à ce qui est décrit ci-dessus en référence à la figure 7 et à la figure 11.

Les raidisseurs 116AB, 116BC, 116CD peuvent être continu ou discontinus et s'étendent de préférence selon la direction d'envergure du noyau.

Les raidisseurs 116AB, 116BC, 116CD permettent de contribuer à la rigidité du noyau et donc à sa tenue au cours des étapes d'injection et de durcissement de la résine et permettent par exemple que les parois constituant le corps de noyau 59 soient plus minces sans compromettre la rigidité du corps de noyau 59. De plus, une telle configuration peut faciliter l'injection de la matière plastique constituant le noyau 58 au cours de la fabrication de celui-ci.

### DOCUMENTS CITES DANS LA DESCRIPTION

US2013017093A1; FR2940173 et son équivalent en langue anglaise US2011318513 ; WO2005000566.

## Revendications

1. Aube (46) pour stator de turbomachine, comprenant :
- un corps (54) en forme de profil aérodynamique formé d'une coque (56) réalisée en un matériau composite formé d'un textile tridimensionnel de fibres de renfort consolidé par une résine durcie, la coque (56) formant une surface d'intrados (60) de l'aube et une surface d'extrados (62) de l'aube reliées l'une à l'autre en formant, d'un côté, un bord d'attaque (64) de l'aube, et d'un côté opposé, un bord de fuite (66) de l'aube, et
- un noyau (58) comprenant un corps de noyau (59) en forme de profil aérodynamique entouré par la coque (56),
**caractérisée en ce que** le noyau (58) est réalisé en matériau plastique non poreux, et le corps de noyau (59) délimite au moins une cavité fermée (68 ; 68A-68D) du noyau (58).

2. Aube selon la revendication 1, dans laquelle la coque (56) se prolonge au-delà du corps de noyau (59) en formant un pied d'aube (50) et une tête d'aube (52) s'étendant respectivement à deux extrémités opposées du corps (54) de l'aube et par lesquels l'aube (46) est apte à être fixée respectivement à un moyeu (44) et une virole externe (42) d'une couronne aubagée de stator de turbomachine.

3. Aube selon la revendication 1 ou 2, dans laquelle le noyau (58) comporte deux portions de noyau (58A, 58B) assemblées l'une à l'autre.

4. Couronne aubagée de stator pour turbomachine, comprenant un moyeu (44) et une virole externe (42) reliés l'un à l'autre par au moins une aube selon l'une quelconque des revendications 1 à 3.

5. Turbomachine, comprenant au moins une aube selon l'une quelconque des revendications 1 à 3 ou au moins une couronne aubagée selon la revendication 4.

6. Procédé de fabrication d'une aube (46) pour stator de turbomachine, comprenant au moins les étapes suivantes :
A) fabriquer, par tissage tridimensionnel de fibres de renfort, une préforme fibreuse (80) comprenant deux portions (82, 84) séparées l'une de l'autre par un passage (86) et reliées l'une à l'autre de part et d'autre du passage (86) ;
B) préparer un ensemble composé de la préforme fibreuse (80) et d'un noyau (58) réalisé en matériau plastique non poreux comprenant un corps de noyau (59) en forme de profil aérodynamique qui délimite au moins une cavité fermée (68; 68A-68D) du noyau, le corps de noyau (59) étant logé dans le passage (86) de la préforme fibreuse (80), de sorte que la préforme fibreuse (80) présente une partie d'intrados (72) et une partie d'extrados (74) séparées l'une de l'autre par le corps de noyau (59) et reliées l'une à l'autre de part et d'autre du corps de noyau (59) en formant une partie de bord d'attaque (76) et une partie de bord de fuite (78) ; puis
C) consolider la préforme fibreuse (80) au moyen d'une résine, par un procédé de moulage composite liquide, de manière à former une coque (56) dans laquelle la partie d'intrados (72) de la préforme fibreuse (80) forme une surface d'intrados (60) de l'aube (46), la partie d'extrados (74) de la préforme fibreuse (80) forme une surface d'extrados (62) de l'aube (46), la partie de bord d'attaque (76) de la préforme fibreuse (80) forme un bord d'attaque (64) de l'aube (46), et la partie de bord de fuite (78) de la préforme fibreuse (80) forme un bord de fuite (66) de l'aube (46).

7. Procédé selon la revendication 6, dans lequel l'étape B comprend au moins les étapes suivantes :
b1) fabriquer le noyau (58) ; puis
b2) insérer le corps de noyau (59) dans le passage (86) de la préforme fibreuse (80).

8. Procédé selon la revendication 6, dans lequel l'étape B comprend au moins les étapes suivantes :
b1') fabriquer séparément des portions de noyau (58A, 58B ; 58C, 58D), parmi lesquelles au moins une première portion de noyau (58A; 58D) comporte ou forme une portion de corps de noyau (92A ; 92D) respective ; puis
b2') insérer au moins la portion de corps de noyau (92A; 92D) de la première portion de noyau (58A; 58D) dans le passage (86) de la préforme fibreuse (80), puis
b3') assembler les portions de noyau (58A, 58B ; 58C, 58D) l'une à l'autre ou les unes aux autres, en joignant des extrémités respectives (88A, 88B ; 94C, 94D) des portions de noyau (58A, 58B ; 58C, 58D) d'une manière étanche, de sorte que les portions de noyau (58A, 58B ; 58C, 58D) forment conjointement le noyau (58), et que au moins la portion de corps de noyau (92A ; 92D) de la première portion de noyau (58A; 58D) forme le corps de noyau (59) du noyau (58).

9. Procédé selon la revendication 8, dans lequel au moins une deuxième portion de noyau (58B ; 58C), parmi les portions de noyau fabriquées à l'étape b1', comporte ou forme une portion de corps de noyau (92B ; 92C) respective, l'étape b2' comprend en outre l'insertion de la portion de corps de noyau (92B ; 92C) de la deuxième portion de noyau (58B ; 58C) dans le passage (86) de la préforme fibreuse (80), et l'assemblage des portions de noyau les unes aux autres à l'étape b3' comprend au moins l'assemblage de la deuxième portion de noyau (58B ; 58C) à la première portion de noyau (58A; 58D) en joignant des extrémités de jonction respectives (94A, 94B ; 94D, 94C) des portions de corps de noyau (92A, 92B ; 92D, 92C) respectives des première et deuxième portions de noyau (58A, 58B ; 58D, 58C) d'une manière étanche au sein du passage (86).

10. Procédé selon la revendication 9, dans lequel les extrémités de jonction (94D, 94C) respectives des portions de corps de noyau (92D, 92C) respectives des première et deuxième portions de noyau (58D, 58C) interceptent deux ouvertures opposées (86A, 86B) du passage (86), à l'issue de l'étape b3'.

11. Procédé selon la revendication 9, dans lequel les extrémités de jonction respectives (94A, 94B) des portions de corps de noyau (92A, 92B) respectives des première et deuxième portions de noyau (58A, 58B) s'étendent sensiblement transversalement à une direction d'envergure du noyau (58), à l'issue de l'étape b3'.

12. Procédé selon l'une quelconque des revendications 9 à 11, dans lequel la cavité fermée (68 ; 68A-68D) du noyau (58) formé à l'étape b2' est formée conjointement par deux cavités ouvertes (98A, 98B ; 98D, 98C) respectives des première et deuxième portions de noyau (58A, 58B ; 58D, 58C) fabriquées à l'étape b1', les deux cavités ouvertes (98A, 98B ; 98D, 98C) s'ouvrant chacune dans l'extrémité de jonction (94A, 94B ; 94D, 94C) correspondante.

13. Procédé selon l'une quelconque des revendications 8 à 11, dans lequel deux portions de noyau (58A, 58B), parmi les portions de noyau fabriquées à l'étape b1', comportent ou forment chacune une partie d'extrémité (96A, 96B) correspondante du noyau (58) présentant une forme évasée jusqu'à une extrémité (90A, 90B) correspondante du noyau (58).

14. Procédé selon l'une quelconque des revendications 6 à 13, dans lequel l'étape A comprend la fabrication de la préforme fibreuse (80) en tissant des fils de trame (87A) au travers d'un faisceau de fils de chaîne (87B) agencés en une pluralité de nappes et en pratiquant un déliage partiel entre deux nappes de fils de chaîne, de sorte que ledit déliage partiel forme le passage (86) séparant les deux portions (82, 84) de la préforme fibreuse (80).

## Patentansprüche

1. Schaufel (46) für den Stator eines Turbotriebwerks, umfassend:
- einen Körper (54) in Form eines aerodynamischen Profils, der aus einer Schale (56) gebildet ist, die aus einem Verbundmaterial hergestellt ist, das aus einem dreidimensionalen Textil aus Verstärkungsfasern gebildet ist, die durch ein gehärtetes Harz verfestigt sind, wobei die Schale (56) eine Unterseitenfläche (60) der Schaufel und eine Oberseitenfläche (62) der Schaufel bildet, die miteinander verbunden sind, wobei sie auf einer Seite eine Anströmkante (64) der Schaufel und auf einer gegenüberliegenden Seite eine Abströmkante (66) der Schaufel bilden, und
- einen Kern (58), der einen Kernkörper (59) in Form eines aerodynamischen Profils umfasst, der von der Schale (56) umgeben ist,
**dadurch gekennzeichnet, dass** der Kern (58) aus nicht porösem Kunststoffmaterial hergestellt ist, und der Kernkörper (59) mindestens einen geschlossenen Hohlraum (68; 68A-68D) des Kerns (58) begrenzt.

2. Schaufel nach Anspruch 1, wobei sich die Schale (56) über den Kernkörper (59) hinaus erstreckt, wobei sie einen Schaufelfuß (50) und einen Schaufelkopf (52) bildet, die sich jeweils auf zwei gegenüberliegenden Enden des Körpers (54) der Schaufel erstrecken und durch die die Schaufel (46) jeweils an einer Nabe (44) und einem Außenring (42) eines beschaufelten Statorkranzes eines Turbotriebwerks befestigt werden kann.

3. Schaufel nach Anspruch 1 oder 2, wobei der Kern (58) zwei Kernabschnitte (58A, 58B) umfasst, die aneinander angebracht sind.

4. Beschaufelter Statorkranz für ein Turbotriebwerk, der eine Nabe (44) und einen Außenring (42) umfasst, die durch mindestens eine Schaufel nach einem der Ansprüche 1 bis 3 miteinander verbunden sind.

5. Turbotriebwerk, das mindestens eine Schaufel nach einem der Ansprüche 1 bis 3 oder mindestens einen beschaufelten Kranz nach Anspruch 4 umfasst.

6. Verfahren zur Herstellung einer Schaufel (46) für den Stator eines Turbotriebwerks, das mindestens die folgenden Schritte umfasst:
A) Herstellen einer faserigen Vorform (80), die zwei Abschnitte (82, 84) umfasst, die durch einen Durchgang (86) voneinander getrennt und beiderseits des Durchgangs (86) miteinander verbunden sind, durch dreidimensionales Weben von Verstärkungsfasern;
B) Anfertigen einer Baugruppe, die sich aus der faserigen Vorform (80) und einem aus nicht porösem Kunststoffmaterial hergestellten Kern (58) zusammensetzt, der einen Kernkörper (59) in Form eines aerodynamischen Profils umfasst, der mindestens einen geschlossenen Hohlraum (68; 68A-68D) des Kerns begrenzt, wobei der Kernkörper (59) so im Durchgang (86) der faserigen Vorform (80) untergebracht ist, dass die faserige Vorform (80) einen Unterseitenteil (72) und einen Oberseitenteil (74) aufweist, die durch den Kernkörper (59) voneinander getrennt und beiderseits des Kernkörpers (59) miteinander verbunden sind, wobei sie einen Anströmkantenteil (76) und einen Abströmkantenteil (78) bilden; und anschließend
C) Verfestigen der faserigen Vorform (80) mittels eines Harzes durch ein Flüssigverbundgussverfahren, um eine Schale (56) zu bilden, wobei der Unterseitenteil (72) der faserigen Vorform (80) eine Unterseitenfläche (60) der Schaufel (46) bildet, der Oberseitenteil (74) der faserigen Vorform (80) eine Oberseitenfläche (62) der Schaufel (46) bildet, der Anströmkantenteil (76) der faserigen Vorform (80) eine Anströmkante (64) der Schaufel (46) bildet, und der Abströmkantenteil (78) der faserigen Vorform (80) eine Abströmkante (66) der Schaufel (46) bildet.

7. Verfahren nach Anspruch 6, wobei Schritt B mindestens die folgenden Schritte umfasst:
b1) Herstellen des Kerns (58); und anschließend
b2) Einsetzen des Kernkörpers (59) in den Durchgang (86) der faserigen Vorform (80).

8. Verfahren nach Anspruch 6, wobei Schritt B mindestens die folgenden Schritte umfasst:
b1') getrenntes Herstellen von Kernabschnitten (58A, 58B; 58C, 58D), von denen mindestens ein erster Kernabschnitt (58A; 58D) einen jeweiligen Kernkörperabschnitt (92A; 92D) umfasst oder bildet; und anschließend
b2') Einsetzen mindestens des Kernkörperabschnitts (92A; 92D) des ersten Kernabschnitts (58A; 58D) in den Durchgang (86) der faserigen Vorform (80), und anschließend
b3') Anbringen der Kernabschnitte (58A, 58B; 58C, 58D) aneinander, wobei die jeweiligen Enden (88A, 88B; 94C, 94D) der Kernabschnitte (58A, 58B; 58C, 58D) dicht so miteinander verbunden werden, dass die Kernabschnitte (58A, 58B; 58C, 58D) gemeinsam den Kern (58) bilden, und dass mindestens der Kernkörperabschnitt (92A; 92D) des ersten Kernabschnitts (58A; 58D) den Kernkörper (59) des Kerns (58) bildet.

9. Verfahren nach Anspruch 8, wobei mindestens ein zweiter Kernabschnitt (58B; 58C) von den in Schritt b1' hergestellten Kernabschnitten einen jeweiligen Kernkörperabschnitt (92B; 92C) umfasst oder bildet, Schritt b2' weiter das Einsetzen des Kernkörperabschnitts (92B; 92C) des zweiten Kernabschnitts (58B; 58C) in den Durchgang (86) der faserigen Vorform (80) umfasst, und das Anbringen der Kernabschnitte aneinander in Schritt b3' mindestens das Anbringen des zweiten Kernabschnitts (58B; 58C) am ersten Kernabschnitt (58A; 58D) umfasst, wobei jeweilige Verbindungsenden (94A, 94B; 94D, 94C) der jeweiligen Kernkörperabschnitte (92A, 92B; 92D, 92C) des ersten und des zweiten Kernabschnitts (58A, 58B; 58D, 58C) innerhalb des Durchgangs (86) dicht verbunden werden.

10. Verfahren nach Anspruch 9, wobei am Ende von Schritt b3' die jeweiligen Verbindungsenden (94D, 94C) der jeweiligen Kernkörperabschnitte (92D, 92C) des ersten und des zweiten Kernabschnitts (58D, 58C) zwei gegenüberliegende Öffnungen (86A, 86B) des Durchgangs (86) abfangen.

11. Verfahren nach Anspruch 9, wobei am Ende von Schritt b3' die jeweiligen Verbindungsenden (94A, 94B) der jeweiligen Kernkörperabschnitte (92A, 92B) des ersten und des zweiten Kernabschnitts (58A, 58B) sich im Wesentlichen quer zu einer Spannenrichtung des Kerns (58) erstrecken.

12. Verfahren nach einem der Ansprüche 9 bis 11, wobei der geschlossene Hohlraum (68; 68A-68D) des in Schritt b2' gebildeten Kerns (58) gemeinsam durch zwei jeweilige offene Hohlräume (98A, 98B; 98D, 98C) des ersten und des zweiten Kernabschnitts (58A, 58B; 58D, 58C), die in Schritt b1' hergestellt wurden, gebildet wird, wobei sich die zwei offenen Hohlräume (98A, 98B; 98D, 98C) jeweils in das entsprechende Verbindungsende (94A, 94B; 94D, 94C) öffnen.

13. Verfahren nach einem der Ansprüche 8 bis 11, wobei zwei Kernabschnitte (58A, 58B) von den in Schritt b1' hergestellten Kernabschnitten jeweils einen entsprechenden Endteil (96A, 96B) des Kerns (58) umfassen oder bilden, der eine Form aufweist, die sich bis zu einem entsprechenden Ende (90A, 90B) des Kerns (58) hin aufweitet.

14. Verfahren nach einem der Ansprüche 6 bis 13, wobei Schritt A das Herstellen der faserigen Vorform (80) durch Weben von Schussfäden (87A) durch ein Bündel von Kettfäden (87B), die in einer Vielzahl von Lagen angeordnet sind, und durch Ausführen einer teilweisen Auftrennung zwischen zwei Kettfädenlagen umfasst, sodass die teilweise Auftrennung den Durchgang (86) bildet, der die zwei Abschnitte (82, 84) der faserigen Vorform (80) trennt.

## Claims

1. Vane (46) for a turbine engine stator, comprising:
- a body (54) in the form of an aerodynamic profile formed by a shell (56) produced from a composite material formed by a three-dimensional textile of reinforcement fibres consolidated by a hardened resin, the shell (56) forming a pressure surface (60) of the vane and a suction surface (62) of the vane connected to each other while forming, on one side, a leading edge (64) of the vane, and on the opposite side a trailing edge (66) of the vane, and
- a core (58) comprising a core body (59) in the form of an aerodynamic profile surrounded by the shell (56),
**characterised in that** the core (58) is produced from a non-porous plastics material, and the core body (59) delimits at least one closed cavity (68; 68A-68D) of the core (58).

2. Vane according to claim 1, wherein the shell (56) is extended beyond the core body (59) while forming a vane root (50) and a vane head (52) extending respectively at two opposite ends of the body (54) of the vane and by means of which the vane (46) is able to be attached respectively to a hub (44) and an outer shroud (42) of a bladed stator ring of a turbine engine.

3. Vane according to claim 1 or 2, wherein the core (58) includes two core portions (58A, 58B) connected to each other.

4. Bladed stator ring for a turbine engine, comprising a hub (44) and an outer shroud (42) connected to each other by at least one vane according to any one of claims 1 to 3.

5. Turbine engine, comprising at least one vane according to any one of claims 1 to 3 or at least one bladed ring according to claim 4.

6. Method for manufacturing a vane (46) for a turbine engine stator, comprising at least the following steps:
A) manufacturing, by three-dimensional weaving of reinforcement fibres, a fibrous preform (80) comprising two portions (82, 84) separated from each other by a passage (86) and connected to each other on either side of the passage (86);
B) preparing an assembly composed of the fibrous preform (80) and of a core (58) produced from non-porous plastics material comprising a core body (59) in the form of an aerodynamic profile that delimits at least a closed cavity (68; 68A-68D) of the core, the core body (59) being housed in the passage (86) of the fibrous preform (80), so that the fibrous preform (80) has a pressure part (72) and a suction part (74) separated from each other by the core body (59) and connected to each other on either side of the core body (59) while forming a leading-edge part (76) and a trailing-edge part (78); then
C) consolidating the fibrous preform (80) by means of a resin, by a liquid composite moulding method, so as to form a shell (56) wherein the pressure part (72) of the fibrous preform (80) forms a pressure surface (60) of the vane (46), the suction part (74) of the fibrous preform (80) forms a suction surface (62) of the vane (46), the leading-edge part (76) of the fibrous preform (80) forms a leading edge (64) of the vane (46), and the trailing-edge part (78) of the fibrous preform (80) forms a trailing edge (66) of the vane (46).

7. Method according to claim 6, wherein step B comprises at least the following steps:
b1) manufacturing the core (58); then
b2) inserting the core body (59) in the passage (86) of the fibrous preform (80).

8. Method according to claim 6, wherein step B comprises at least the following steps:
b1') manufacturing the core portions (58A, 58B; 58C, 58D) separately, among which at least one first core portion (58A; 58D) includes or forms a respective core body portion (92A; 92D); then
b2') inserting at least the core body portion (92A; 92D) of the first core portion (58A; 58D) in the passage (86) of the fibrous preform (80), then
b3') connecting the core portions (58A, 58B; 58C, 58D) to each other or to one another, joining the respective ends (88A, 88B; 94C, 94D) of the core portions (58A, 58B; 58C, 58D) sealingly, so that the core portions (58A, 58B; 58C, 58D) conjointly form the core (58), and so that at least the core body portion (92A; 92D) of the first core portion (58A; 58D) forms the core body (59) of the core (58).

9. Method according to claim 8, wherein at least a second core portion (58B; 58C), among the core portions manufactured at the step b1', includes or forms a respective core body portion (92B; 92C), the step b2' furthermore comprises inserting the core body portion (92B; 92C) of the second core portion (58B; 58C) in the passage (86) of the fibrous preform (80), and connecting the core portions to one another at the step b3' comprises at least connecting the second core portion (58B; 58C) to the first core portion (58A; 58D) by joining the respective junction ends (94A, 94B; 94D, 94C) of the respective core body portions (92A, 92B: 92D, 92C) of the first and second core portions (58A, 58B; 58D, 58C) sealingly in the passage (86).

10. Method according to claim 9, wherein the respective junction ends (94D, 94C) of the respective core body portions (92D, 92C) of the first and second core portions (58D, 58C) intercept two opposite openings (86A, 96B) of the passage (86), at the end of the step b3'.

11. Method according to claim 9, wherein the respective junction ends (94A, 94B) of the respective core body portions (92A, 92B) of the first and second core portions (58A, 58B) extend substantially transversely to a span direction of the core (58), at the end of the step b3'.

12. Method according to any one of claims 9 to 11, wherein the closed cavity (68; 68A-68D) of the core (58) formed at the step b2' is formed conjointly by two respective open cavities (98A, 98B; 98D, 98C) of the first and second core portions (58A, 58B; 58D, 58C) manufactured at the step b1', the two open cavities (98A, 98B; 98D, 98C) each opening out in the corresponding junction end (94A, 94B; 94D, 94C).

13. Method according to any one of claims 8 to 11, wherein two core portions (58A, 58B), among the core portions manufactured at the step b1', each include or form a corresponding end part (96A, 96B) of the core (58) having a splayed shape as far as a corresponding end (90A, 90B) of the core (58).

14. Method according to any one of claims 6 to 13, wherein the step A comprises manufacturing the fibrous preform (80) by weaving weft threads (87A) through a cluster of warp threads (87B) arranged in a plurality of layers, and by practising a partial non-interlinking between two layers of warp threads, so that said partial non-interlinking forms the passage (86) separating the two portions (82, 84) of the fibrous preform (80).
